# EUROPEAN PATENT APPLICATION

(11) **EP 4 364 872 A1**
(43) Date of publication of application: **08.05.2024**
(21) Application number: 23208202.4
(22) Date of filing: 07.11.2023
(51) Int. Cl.: B22F 10/28, B22F 10/39, B22F 10/64, B22F 10/66, B33Y 80/00, G05B 19/4099

(54) **ADDITIVE MANUFACTURED COMPONENT INCLUDING TEXTURED WITNESS LINES**

(30) Priority: 07.11.2022 US 202263423215 P
(71) Applicant: RTX Corporation, Farmington, CT 06032 (US)
(72) Inventor: BINEK, Lawrence A., Farmington, 06032 (US); RAMSEY, Christopher D., Farmington, 06032 (US); SATOH, Gen, Farmington, 06032 (US); GARDELL, Benjamin G., Farmington, 06032 (US); SIROIS, Dean R., Farmington, 06032 (US)
(74) Representative: Dehns

(57) **Abstract**

A method of manufacturing an (AM) component (100) includes generating a computer-aided design (CAD) model of target AM component (100), and determining a target machining area on the target AM component (100). The target machining area is designated to receive a machining process. The method further comprises determining a witness line region (110, 112, 122) corresponding to the target machining area of the component (100), and performing an AM component build to build the AM component (100) and form a plurality of textured witness lines (120) in the witness line region (110, 112, 122).

## Description

### BACKGROUND

Exemplary embodiments of the present disclosure relate generally to additive manufactured component, and more particularly, to an additive manufactured component that includes textured witness lines.

When fabricating mechanical components, it is a common goal for the final component to yield a target profile and/or surface texture. Various machining operations such as ablating, for example, can be performed to manipulate the profile and/or surface texture. When performing these machining operations, however, it is difficult to determine whether the target profile and/or target surface texture has been successfully achieved.

### BRIEF DESCRIPTION

According to a non-limiting embodiment, a method of manufacturing an (AM) component includes generating a computer-aided design (CAD) model of target AM component, and determining a target machining area on the target AM component. The target machining area is designated to receive a machining process. The method further comprises determining a witness line region corresponding to the target machining area of the component, and performing an AM component build to build the AM component and form a plurality of textured witness lines in the witness line region.

In a further embodiment, the plurality of textured witness lines have a three-dimensional physical profile.

In a further embodiment of any of the previous embodiments, the plurality of textured witness lines protrude from a surface of the AM component.

In a further embodiment of any of the previous embodiments, the textured witness lines extend upwards from the surface to define a height ranging from about 0.005 inches (0.127mm) to about 0.010 inches (0.254mm).

In a further embodiment of any of the previous embodiments, the method further comprises generating a build file based at least in part on the CAD file, the targeted machining areas, and a plurality of tool machine start/stop events for defining the plurality of textured witness lines, loading the build file into an AM build machine, and performing the AM build based on the build file. The AM build machine forms the plurality of textured witness lines in a witness line region corresponding to the targeted machining areas.

In a further embodiment of any of the previous embodiments, performing the AM build includes performing a series of AM material depositions and AM material deposition pauses to build the AM material layer-by-layer at a first target region of the witness line region while avoiding deposition of the AM material at a second target region of the witness line region to form the textured witness lines.

In a further embodiment of any of the previous embodiments, the witness line region is formed adjacent to a portion of the AM component designated to omit the machining process.

In a further embodiment of any of the previous embodiments, the witness line region is formed adjacent to a portion of the AM component designated to receive a second machining process different from the machining processes designated for the witness line region.

According to another non-limiting embodiments, an additive manufactured (AM) component comprises a target machining area designated to receive a machining process, and a plurality of textured witness lines formed in the target machining area, the plurality of witness lines having a three-dimensional physical profile configured to guide machining of the AM component.

In a further embodiment of any of the previous embodiments, the plurality of textured witness lines protrude from a surface of the AM component.

In a further embodiment of any of the previous embodiments, the textured witness lines extend upwards from the surface to define a height ranging from about 0.005 inches (0.127mm) to about 0.010 inches (0.254mm).

In a further embodiment of any of the previous embodiments, the plurality of textured witness lines are in a region adjacent to a portion of the AM component designated to omit the machining process.

In a further embodiment of any of the previous embodiments, the plurality of textured witness lines are in a region adjacent to portion of the AM component designated to receive a second machining process different from the machining processes designated for the witness line region.

### BRIEF DESCRIPTION OF THE DRAWINGS

The following descriptions should not be considered limiting in any way. With reference to the accompanying drawings, like elements are numbered alike:
FIG. 1 is a perspective view of an AM component including textured witness lines according to a non-limiting embodiment of the present disclosure;
FIG. 2 illustrates a close-up view of textured witness lines formed on a portion of the AM component shown in FIG. 1 according to a non-limiting embodiment of the present disclosure;
FIG. 3 illustrates a close-up view of textured witness lines formed on another portion of the AM component shown in FIG. 1 according to a non-limiting embodiment of the present disclosure;
FIGS. 4A and 4B illustrates an AM component which utilizes textured witness lines to perform different finishing and machining processes according to a non-limiting embodiment of the present disclosure;
FIG. 5 illustrates an AM component following a polishing processes which utilizes textured witness lines as an indicator of a target machining process according to a non-limiting embodiment of the present disclosure; and
FIG. 6 is a flow diagram illustrating a method of fabricating an AM component including textured witness lines according to a non-limiting embodiment of the present disclosure.

### DETAILED DESCRIPTION

A detailed description of one or more embodiments of the disclosed apparatus and method are presented herein by way of exemplification and not limitation with reference to the Figures.

Additive manufacturing (AM) represents a large number of processes covering a wide range of materials. The design of AM industrial parts involves the use of computer-aided design (CAD) algorithms and functionalities to generate a build file used for the creation of a digital representation of the physical object which will be additively manufactured. AM material such as a metal-based powder, for example, is deposited layer-by-layer in the build direction based on the build file, and can be processed based on the principle of melting or sintering the material. The melting is achieved by applying a heat source (i.e., laser or electron beam) which melts the powder and builds the physical part.

Various non-limiting embodiments of the present disclosure provides an AM component that includes textured witness lines formed during the AM build process. According to one or more non-limiting embodiments, when forming the witness lines during the AM build, texture gradients of the witness lines are changed to form textured witness lines, which can be used to identify level of distortion and amount of machining required.

In one or more non-limiting embodiments, formation of the witness line can occur at a first layer, halted at the next second layer, formed again at the next third layer, etc., such that a localized region of the component includes a textured or protruding formation of witness lines. Accordingly, the textured witness lines can physically indicate by sight and/or touch the level of machining necessary to achieve a targeted profile. For example, a machining process (e.g., ablating) can be applied to a local area that is intended to achieve a target smoothness and that initially contains textured witness lines. When, after performing the machining process, the textured witness lines are no longer present, it can be determined that the targeted smoothness has been achieved. When, however, the textured witness lines, or a portion of the textured witness lines still remain following the initial machining process, the machining process can be continued until the textured witness lines are removed, thereby indicating the target smoothness has been achieved.

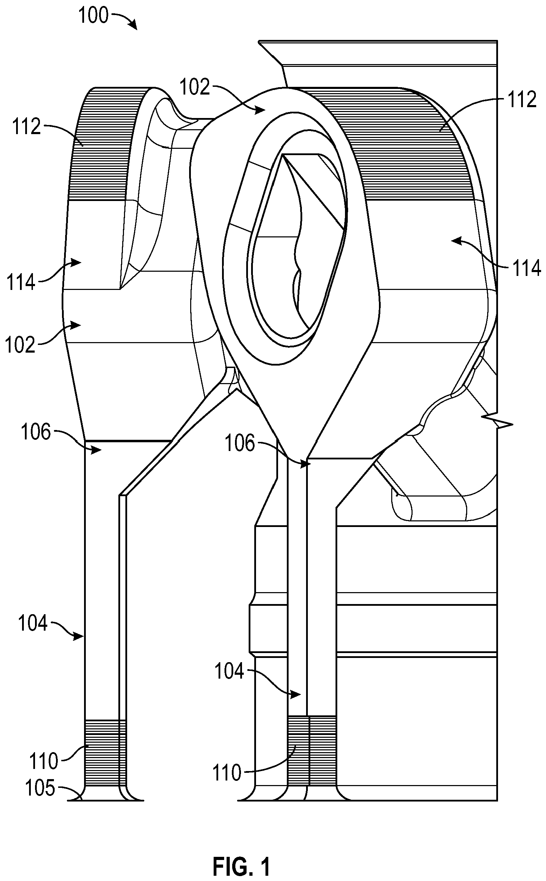

With reference now to FIG. 1, an AM component 100 is illustrated according to a non-limiting embodiment of the present disclosure. In one or more non-limiting embodiments, the AM component can comprise a low-density alloy material or a high-density alloy material. The high-density alloy material includes, but is not limited to, Inconel625 (IN625), Inconel718 (IN718), Hastelloy X (Hast-X), various nickel-base (Ni-base) superalloys, 17-4PH stainless steel, and Titanium (Ti).

The non-limiting embodiment of the AM component 100 illustrated in FIG. 1 includes an upper portion 102 and a support structure 104. The support structure 104 extends from a base 105 to a terminus 106 (e.g., an interface 106) defined by a region where the support structure 104 meets the upper portion 102. It should be appreciated that the profiles of the AM component 100 and portions thereof are not limiting and that AM components with different profiles, sizes, shapes and portions/segments can be included without departing from the scope of the invention.

The AM component 100 includes one or more witness line regions formed on a surface of the part 100 and configured guide machining of the AM component 100. According to a non-limiting embodiments, the witness line regions include a first witness line region 110 and a second witness line region 112. Although two witness line regions 110 and 112 are shown, it should be apricated that more or less witness line regions can be formed on the AM component 100 without departing from the scope of the invention. In addition, the locations of the witness line regions 110 and 112 are not limited to those described herein, but rather can be formed at additional or different regions of the AM component 100 without departing from the scope of the invention.

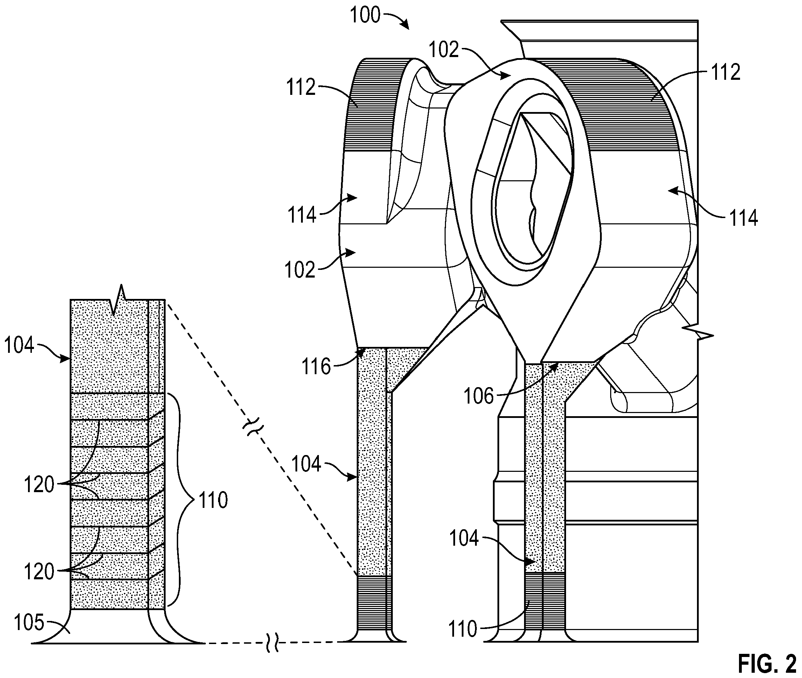

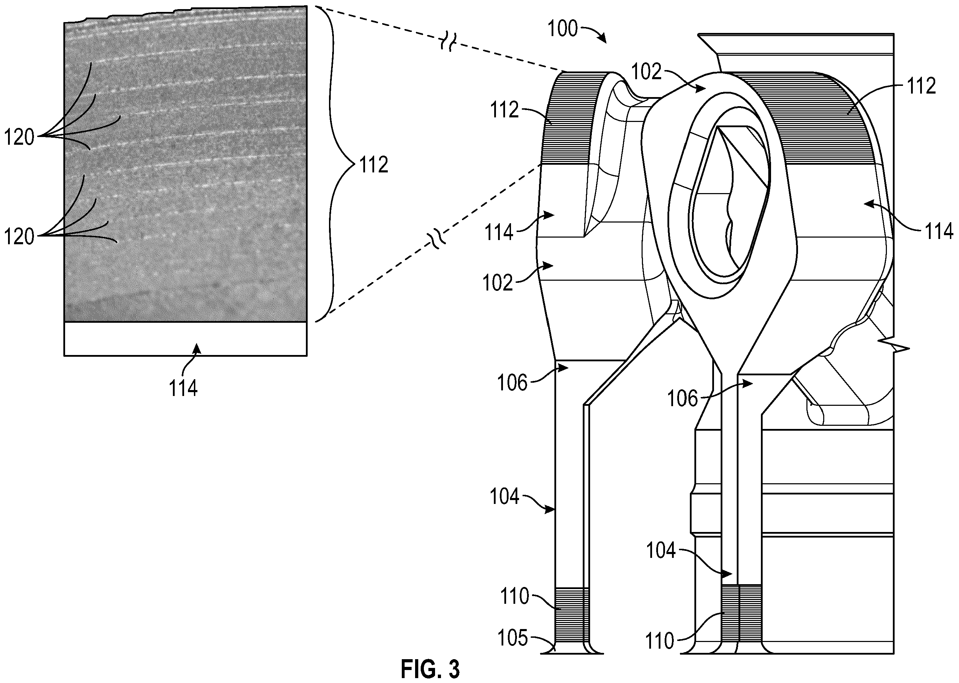

Referring to FIG. 2, for example, the first witness line region 110 is formed on a portion (e.g. one or more sides) of the support structure 104. The first witness line region 110 includes a plurality of individual textured witness lines 120. Referring to FIG. 3, for example, the second witness line region 112 is formed on an upper surface 114 of the upper portion 102. The second witness line region 112 includes a plurality of individual textured witness lines 120. In any of the examples described above, the textured witness lines 120 are formed in their respective witness line regions 110 and 112 and can have a three-dimensional (3D) physical profile. In one or more non-limiting embodiments, the textured witness lines 120 are formed in their respective witness line regions 110 and 112 and protrude from the surface of the AM component 100. Formation of the textured witness lines 120 can occur at a first layer, halted at the next second layer, formed again at the next third layer, etc., such that a localized witness line region of the component 100 includes a textured or protruding formation of witness lines 120. In one or more non-limiting embodiments, the textured witness lines 120 extend upwards from the surface on which they are formed by a height ranging, for example, from about 0.005 inches (0.005") (0.127mm) to about 0.010" (0.254mm) to form textured witness lines 120 which are noticeable to the physical touch.

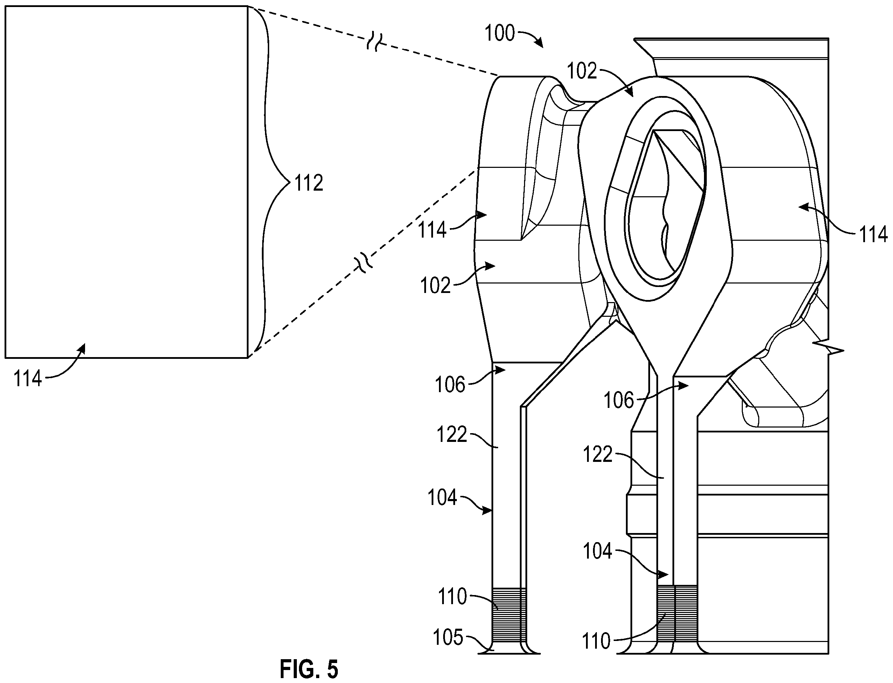

As described herein, the textured witness lines 120 can physically indicate by sight and/or touch a level of machining necessary to achieve a targeted profile of the AM component 100. For example, a machining process (e.g., ablating, polishing, etc.) can be applied to the witness line region(s) (e.g., witness line region 112) designated to have a target machining process (e.g., a target smoothness). When, after performing the machining process, the textured witness 120 lines may no longer present to indicated that the targeted smoothness has been achieved, as shown in FIG. 5. When, however, the textured witness lines 120, or a portion of the textured witness lines, still remain following the initial machining process, the machining process can be continued until the textured witness 120 lines are removed, thereby indicating the target smoothness has been achieved as shown in FIG. 5.

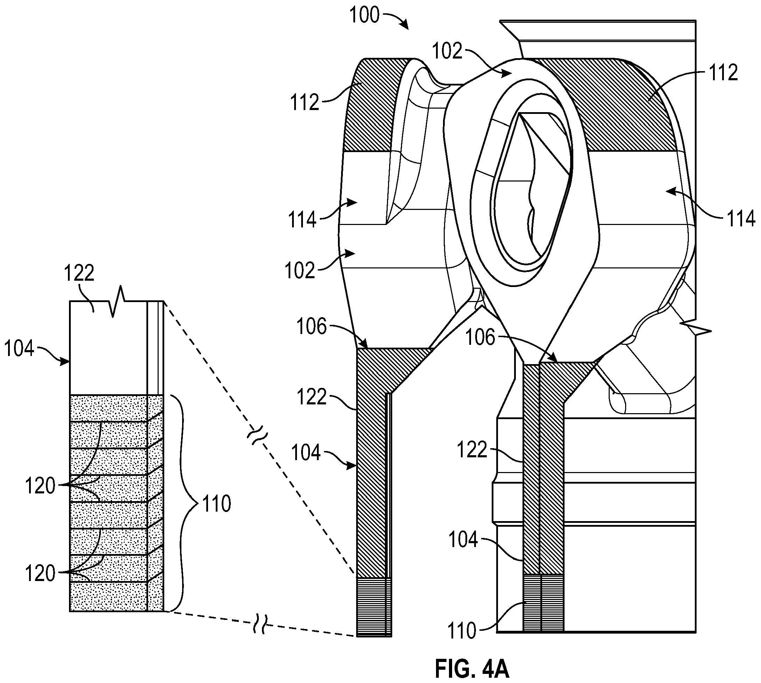

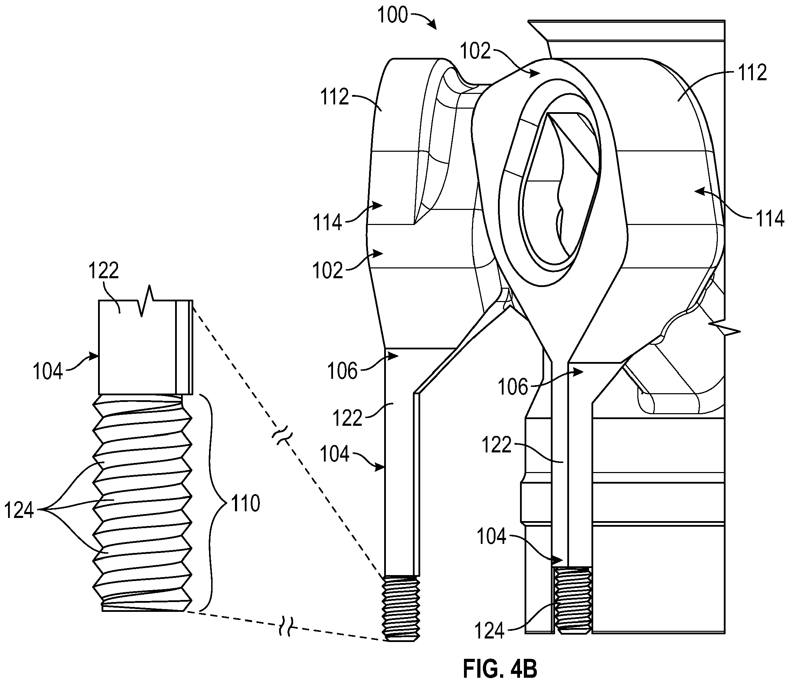

In one or more non-limiting embodiments, one or more of the witness line regions 110, 112 is formed adjacent to a portion of the AM component 100 designated to receive a second machining process different from the machining processes designated for the witness line region. As shown in FIG. 4A, for example, the witness line regions 112 and 122 can be designated for a finishing process such as a smoothening or polishing process, for example, to form a smooth surface, while witness line region 110 can be designated for a machining process. The machining process can include forming machined elements 124 such as fastener threads, for example, on the surface of the component 100. In this manner, a component 100 can be fabricated to include a portion configured to receive a bolt to be threaded on the machined threaded portion and stops at regions designated for polishing or smoothing (e.g., region 122) as shown in FIG. 4B. Although the example shown in FIG. 4B illustrates the machine elements 124 as fastener threads, it should be appreciated that various different types of machine elements can be formed without departing from the scope of the invention. The different types of machine elements can include, but are not limited to, slots, fastening clips, guide rails, male and/or female connectors, and snaps.

As further illustrated in FIGS. 4A and 4B, a first witness line region 110 can be formed to have textured witness lines having a first pattern and a second witness line region 112 and 122 can be formed to have textured witness lines having a second pattern different from the first pattern. The first pattern is indicative of a first type of machining process or finishing process to be applied to the first witness line region 110 while the second pattern can is indicative of a second type of machining process or finishing different from the first type of machining process or finishing process, which is to be applied to the second witness line region 112.

In one or more non-limiting embodiments, the textured witness lines 120 can be utilized as reference lines indicating portions of the AM component that are intended to omit a secondary process such as ablating or polishing. When used as reference lines, the textured witness lines 120 can be used to indicate a point at which to halt a secondary process (e.g., ablating or polishing). Referring to FIG. 2, for example, the first witness line region 110 are located beneath a portion of support structure intended to be polished and smoothened. Turning to FIG. 5, the AM component 100 is illustrated after using the witness lines 120 of the first witness line region 110 as a reference point at which to halt polishing of the support structure 104. According, the portion of the support structure above the first witness line region 110 is polished to form smooth surfaces 200 until reaching the first witness line region 110.

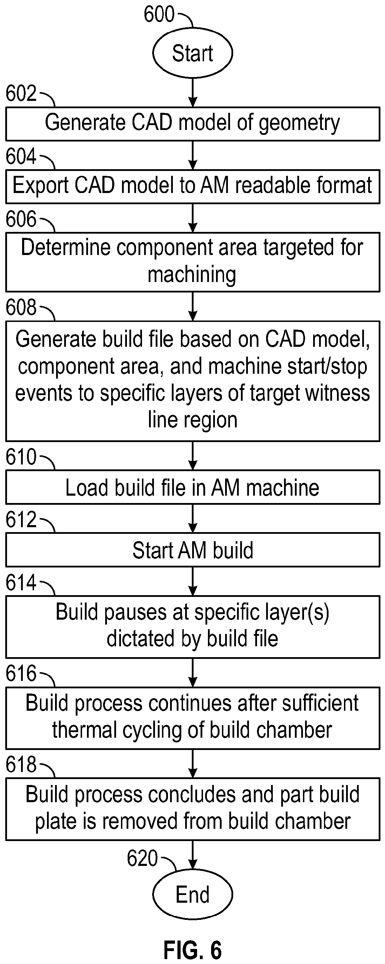

Referring now to FIG. 6, a method of fabricating an AM component including textured witness lines is illustrated according to a non-limiting embodiment. The method begins at operation 600, and at operation 602 a CAD model of a target AM component is generated. The CAD model includes definitions, measurements and geometries of the target AM component in its targeted final form, and the CAD model is exported in an AM software readable format at operation 604. At operation 606, one or more areas on the target AM component targeted for machining are determined. The one or more targeted machining areas include, for example, an area of the component targeted to be smoothened or polished. At operation 608, a build file is generated based on the CAD file, the one or more targeted machining areas, and a plurality of tool machine start/stop events for defining corresponding witness lines in respective witness line region.

Turning to operation 610, the build file is loaded into an AM manufacturing tool and the AM build is started at operation 612. At operation 614, the AM manufacturing tool pauses at specific layers before returning to build as dictated by the build file start/stop events included in the build file. In one or more non-limiting embodiments, performing the AM build includes performing a series of AM material depositions and AM material deposition pauses to build the AM material layer-by-layer at a first target region of the witness line region while avoiding deposition of the AM material at a second target region of the witness line region to form the textured witness lines. At operation 616, the build process continues after performing thermal cycling of the build chamber to set and cure the sintered AM material. At operation 618, the build process concludes and the build plate is removed from the build chamber before the method ends at operation 620.

As described herein, various non-limiting embodiments of the present disclosure provide an AM component that includes textured witness lines formed during the AM build process. The formation of the witness line can occur at a first layer, halted at the next second layer, formed again at the next third layer, etc., such that a localized region of the component includes a textured or protruding formation of witness lines. Accordingly, the textured witness lines can physically indicate by sight and/or touch the level of machining necessary to achieve a targeted profile.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of manufacturing an (AM) component (100), the method comprising:
generating a computer-aided design (CAD) model of target AM component (100);
determining at least one target machining area on the target AM component (100), the at least one target machining area designated to receive a machining process;
determining at least one witness line region (110, 112, 122) corresponding to the at least one target machining area of the component (100); and
performing an AM component build to build the AM component (100) and form a plurality of textured witness lines (120) in the at least one witness line region (110, 112, 122).

2. The method of claim 1, wherein the plurality of textured witness lines (120) have a three-dimensional physical profile.

3. The method of claim 1 or 2, wherein the plurality of textured witness lines (120) protrude from a surface of the AM component (100).

4. The method of claim 3, wherein the plurality of textured witness lines (120) extend upwards from the surface to define a height ranging from about 0.005 inches (0.127mm) to about 0.010 inches (0.254mm).

5. The method of any preceding claim, further comprising:
generating a build file based at least in part on the CAD file, the at least one targeted machining areas, and a plurality of tool machine start/stop events for defining the plurality of textured witness lines (120);
loading the build file into an AM build machine; and
performing the AM build based on the build file,
wherein the AM build machine forms the plurality of textured witness lines (120) in the at least one witness line region (110, 112, 122) corresponding to the at least one targeted machining area.

6. The method of claim 5, wherein the performing the AM build includes performing a series of AM material depositions and AM material deposition pauses to build the AM material layer-by-layer at a first target region among the at least one target region while avoiding deposition of the AM material at a second target region of the among the at least one among the at least one target region to form the textured witness lines (120).

7. The method of any preceding claim, wherein the at least one witness line region (110, 112, 122) is formed adjacent to a portion of the AM component (100) designated to omit the machining process.

8. The method of any of claims 1 to 6, wherein the at least one witness line region (110, 112, 122) is formed adjacent to a portion of the AM component (100) designated to receive a second machining process different from the machining processes designated for the at least one witness line region (110, 112, 122).

9. The method of any preceding claim, wherein a first witness line region (110) among the at least one witness line region (110, 112, 122) includes a first plurality of textured witness lines (120) having a first pattern and a second witness line region (112, 122) among the at least one witness line region (110, 112, 122) different from the first witness region (110) includes a second plurality of textured witness lines (120) having a second pattern different from the first pattern, and
wherein the first pattern indicates a first type of machining process to be performed in the first witness line region (110) and the second pattern indicates a second type of machining process to be performed in the second witness line region (112, 122), the second type of machining process different from the first type of machining process.

10. An additive manufactured (AM) component (100) comprising:
a target machining area designated to receive a machining process; and
a plurality of textured witness lines (120) formed in the target machining area, the plurality of witness lines (120) having a three-dimensional physical profile configured to guide machining of the AM component (100).

11. The AM component (100) of claim 10, wherein the plurality of textured witness lines (120) protrude from a surface of the AM component (100).

12. The AM component (100) of claim 11, wherein the textured witness lines (120) extend upwards from the surface to define a height ranging from about 0.005 inches (0.127mm) to about 0.010 inches (0.254mm).

13. The AM component (100) of claim 10, 11 or 12, wherein the plurality of textured witness lines (120) are in a region adjacent to a portion of the AM component (100) designated to omit the machining process.

14. The AM component (100) of claim 10, 11 or 12, wherein the plurality of textured witness lines (120) are in a region adjacent to portion of the AM component (100) designated to receive a second machining process different from the machining processes designated for the witness line region.

15. The AM component (100) of any of claims 10 to 14, wherein a first witness line region (110) among the at least one witness line region (110, 112, 122) includes a first plurality of textured witness lines (120) having a first pattern and a second witness line region (112, 122) among the at least one witness line region (110, 112, 122) different from the first witness region (110) includes a second plurality of textured witness lines (120) having a second pattern different from the first pattern, and
wherein the first pattern indicates a first type of machining process to be performed in the first witness line region (110) and the second pattern indicates a second type of machining process to be performed in the second witness line region (112, 122), the second type of machining process different from the first type of machining process.
